Europäisches Patentamt

European Patent Office

Office européen des brevets

(11) Veröffentlichungsnummer: **0 060 339**
**B1**

(12) **EUROPÄISCHE PATENTSCHRIFT**

(45) Veröffentlichungstag der Patentschrift:
15.07.87

(51) Int. Cl.⁴: **H 04 Q 9/14,** G 06 F 13/00

(21) Anmeldenummer: **81109427.5**

(22) Anmeldetag: **30.10.81**

(54) **Station für Fernwirkeinrichtung.**

(30) Priorität: **18.03.81 DE 3110600**

(43) Veröffentlichungstag der Anmeldung:
**22.09.82 Patentblatt 82/38**

(45) Bekanntmachung des Hinweises auf die Patenterteilung:
**15.07.87 Patentblatt 87/29**

(84) Benannte Vertragsstaaten:
**DE IT NL SE**

(56) Entgegenhaltungen:
**EP - A - 0 060 932**
**DE - A - 2 516 681**
**DE - A - 2 715 213**
**DE - A - 2 908 629**
**DE - A - 3 110 614**

**NTZ, Band 32, Nr. 2, 1979, Seiten 96-98, Berlin, DE; N. BUDNIK: "Möglichkeiten des Einsatzes von Mikroprozessoren zur Übertragung von Fernwirktelegrammen"**
**NACHRICHTENTECHNIK-ELEKTRONIK, Band 29, Nr. 6, 1979, Seiten 229-232, Berlin, DD; W. CIMANDER u.a.: "Mehrmikrorechnersysteme mit Registerkopplung"**
**COMPCON 76, FALL MEETING, 13th IEEE COMPUTER SOCIETY INTERNATIONAL CONFERENCE, Washington, D.C., Seiten 277-282, IEEE, New York, US;**

(73) Patentinhaber: **Siemens Aktiengesellschaft Berlin und München, Wittelsbacherplatz 2, D-8000 München 2 (DE)**

(72) Erfinder: **Herkert, Hans, Dipl.-Ing., Kurzweg 3, D-8021 Hohenschäftlarn (DE)**

(56) Entgegenhaltungen: (Fortsetzung)
**P.M. RUSSO: "An interface for multi-microcomputer systems"**

Beschreibung

Die Erfindung bezieht sich auf eine Station für Fernwirkeinrichtungen, bei der Signaleingabeeinrichtungen über wenigstens einen gemeinsamen Bus an eine Einrichtung zur Ablaufsteuerung angeschlossen sind, wobei die Signaleingabeeinrichtungen jeweils auf eine Adresse einstellbar sind und durch die Einrichtung zur Ablaufsteuerung Impulstelegramme, insbesondere sowohl im Abfrage- als auch im Anreizbetrieb, aussendbar sind.

Eine derartige Station ist bereits aus der DE-A-2 715 213 bekannt. Bei der bekannten Station eines Fernwirksystems sind Signaleingabeeinrichtungen und Signalausgabeeinrichtungen an einen gemeinsamen Bus angeschlossen. Die Station dient dazu, die Meldungen dieser Eingabeelemente und ihre Adressen abzufragen und sie an andere Stationen und Zentralen weiterzugeben; andererseits Meldungen anderer Stationen an die Ausgabeelemente weiterzugeben. Die Station legt im Abfragebetrieb nacheinander nach einem Suchverfahren alle Adressen an den parallelen Adressbus. Alle Eingabeelemente empfangen die Adressen und vergleichen sie mit ihrer eigenen, über Adressschalter festgelegten Adresse. Fällt bei irgendeinem Eingabeelement der Vergleich positiv aus, so antwortet dieses mit einem Signal. Die Station hält daraufhin die Adresse fest und holt sich über die Datenleitungen 4bit-weise die Meldungen dieses Eingabeelementes. Anschliessend wird der Suchlauf fortgesetzt. In entsprechender Weise kann man vorsehen, dass die Station bei Meldungsgabe die Adresse an den Adressbus legt und die Meldungen 4bit-weise an den Datenbus gibt, so dass ein Ausgabeelement mit der entsprechenden Adresse die Meldungen übernimmt.

Bei Anreizbetrieb sind in den einzelnen Signaleingabeeinrichtungen Anreizspeicher vorgesehen und es geben jeweils nur die Signaleingabeeinrichtungen eine Meldung ab, bei denen ein Anreiz gespeichert ist.

Aufgabe der Erfindung ist es, eine Station einer Fernwirkeinrichtung derart auszubilden, dass sich der Informationsaustausch zwischen der Einrichtung zur Ablaufsteuerung und den Signaleingabe- und gegebenenfalls auch den Signalausgabeeinrichtungen auf möglichst einfache Weise schnell und sicher durchführen und leicht an den jeweiligen Anwendungsfall anpassen lässt.

Gemäss der Erfindung wird die Station zur Lösung dieser Aufgabe derart ausgebildet, dass die Signaleingabeeinrichtungen jeweils einen, von Signaleingabeeinrichtung zu Signaleingabeeinrichtung auf verschiedene Staffelzeiten voreinstellbaren Staffelzeitzähler enthalten und dass der Staffelzeitzähler jeweils über ein an einen Sperrein- und -ausgang gelegtes Signal während der Dauer des Signals für ein Weiterzählen sperrbar ist und dass der Sperreingang bei sendender Signaleingabeeinrichtung mit Blockierpotential beaufschlagbar ist und dass die Signaleingabeeinrichtungen jeweils mit ihrem Sperreingang an eine erste Sammelleitung und mit je einem Rücksetzeingang des Staffelzeitzählers an eine zweite, an die Einrichtung zur Ablaufsteuerung geführte Sammelleitung angeschlossen sind.

Bei der Abfrage der Signaleingabeeinrichtungen gibt die Station über eine Signalleitung einen Impuls an alle Signaleingabeeinrichtungen ab. Die Signaleingabeeinrichtungen laden nun mit einer Adresse einen rückwärts zählenden Zähler. Die Zähler werden mit etwa der gleichen Frequenz getaktet. Diejenige Signaleingabeeinrichtung, deren Zähler zuerst auf 0 ist, sendet daraufhin zuerst eine Adresse, dann ihre Meldungen. Während des Sendens stoppt ein Sperrsignal auf einer alle Signaleingabeeinrichtungen verbindenden Leitung das Weiterzählen der Zähler der anderen Signaleingabeeinrichtungen. Hat die sendende Signaleingabeeinrichtung die Sendung beendet, dann wird das Sperrsignal aufgehoben, das Weiterzählen der anderen Zähler wird fortgesetzt und die Signaleingabeeinrichtung mit der nächst höheren Adresse erhält Sendeerlaubnis.

Durch diese Massnahmen ergibt sich in vorteilhafter Weise eine Station, bei der die Signalgabe durch die Signaleingabeeinrichtungen weitgehend durch die Signaleingabeeinrichtungen selbst gesteuert wird. In weiterer Ausgestaltung der Erfindung wird die Station derart ausgebildet, dass die Adressen, von denen jede in den Signaleingabeeinrichtungen der Station nur einmal vorkommt, jeweils zusätzlich zu den eingegebenen Signalen in codierter Form übertragen werden und dass die Staffelzeitzähler durch einen auf die jeweilige Adresse einstellbaren, insbesondere als Codierschalter ausgebildeten Adressenspeicher auf eine der eingestellten Adresse zugeordnete Zählerstellung voreinstellbar sind.

In Weiterbildung der Erfindung wird der Informationsaustausch zwischen der Einrichtung zur Ablaufsteuerung und den Signaleingabeeinrichtungen über einen Datenspeicher geführt, der über eine bitparallele Schnittstelle mit der Einrichtung zur Ablaufsteuerung und über einen bitseriellen Bus an die Signaleingabeeinrichtungen geführt ist.

Dabei erfolgt der Datenaustausch zwischen Datenspeicher und Einrichtung zur Ablaufsteuerung parallel. Der Datenaustausch zwischen Datenspeicher und Signaleingabeeinrichtungen erfolgt seriell und der Datenspeicher fragt die Signaleingabeeinrichtungen ab und speichert die staffelzeitgesteuert eingehenden Meldungen. Die gespeicherten Meldungen stehen der Einrichtung zur Ablaufsteuerung zur Abfrage zur Verfügung. Vorzugsweise ist der Datenspeicher mit einer Einrichtung zur Datenverarbeitung versehen und — gegebenenfalls damit zusammen — als Mikrocomputer ausgebildet.

Soll die Station bei Staffelzeitsteuerung nur solche Eingabesignale berücksichtigen, die mit einem Anreiz verbunden sind, so wird die Station, insbesondere bei bitparalleler Datenübertragung, zweckmässigerweise derart ausgebildet, dass die Signaleingabeeinrichtungen jeweils einen Anreizspeicher enthalten und dass nur die Signaleingabeeinrichtungen, bei denen ein Anreiz gespeichert ist, durch den Staffelzeitzähler zur Signalgabe freigebbar sind.

Man kann zur Abfrage aller Signaleingabeeinrichtungen eine Adressenabfrage vorsehen. In Weiterbildung der Erfindung wird die Station derart ausgebildet, dass die Signaleingabeeinrichtungen jeweils einen Anreizspeicher enthalten und dass die Signaleingabeeinrichtungen über zwei Steuerleitungen derart steuerbar sind, dass durch einen Steuerimpuls auf der einen Leitung alle Signaleingabeeinrichtungen und durch einen Steuerimpuls auf der anderen Leitung nur die Signaleingabeeinrichtungen, bei denen ein Anreiz vorliegt, durch den Staffelzeitzähler aktivierbar sind.

Gibt die Einrichtung zur Ablaufsteuerung bzw. der Datenspeicher einen Impuls auf die eine Leitung, dann werden nur die Rückwärtszähler der Signaleingabeeinrichtungen geladen, die eine Meldungsänderung haben, und nur diese senden ihre Informationen an die Einrichtung zur Ablaufsteuerung; gibt die Einrichtung zur Ablaufsteuerung einen Impuls auf die andere Leitung, antworten alle Signaleingabeeinrichtungen.

In Weiterbildung der Erfindung lassen sich Alt-/Neu-Vergleicher in den Signaleingabeeinrichtungen dadurch einsparen, dass alle Signaleingabeeinrichtungen durch ihren Staffelzeitzähler zur Signalgabe freigebbar sind und dass der Datenspeicher mit einer Einrichtung zum Alt-/Neu-Vergleich versehen ist und wenigstens für einen vorgegebenen Teil der Meldesignale durch Alt-Neu-Vergleich Anreize bildet und dass die den Anreizen zugeordneten Meldesignale durch die Einrichtung zur Ablaufsteuerung vom Datenspeicher abfragbar sind.

Man kann für serielle oder parallele Datenübertragung Signaleingabeeinrichtungen verschiedenen Typs verwenden. Zweckmässigerweise sind die Signaleingabeeinrichtungen derart ausgebildet, dass sie wahlweise über den bitseriellen Bus und den Datenspeicher oder über die bitparallele Schnittstelle unmittelbar an die Einrichtung zur Ablaufsteuerung anschliessbar sind.

Man kann die Station ferner derart ausbilden, dass die Einrichtung zur Ablaufsteuerung und der Datenspeicher jeweils durch einen Mikrocomputer gebildet sind, und dass an den zur Datenspeicherung und/oder Datenverarbeitung dienenden Mikrocomputer ein Peripherie-Baustein für eine serielle Ein- oder Ausgabe der Daten angeschlossen ist und dass an der bitparallelen Schnittstelle ein Pufferspeicher mit wenigstens einem Datenregister je Übertragungsrichtung vorgesehen ist und dass der als Einrichtung zur Ablaufsteuerung dienende Mikrocomputer den Zeitpunkt des wortseriellen Datenaustausches über den Pufferspeicher sowohl in der einen als auch in der anderen Übertragungsrichtung bestimmt. Ein solcher Aufbau ist bereits in der EP-A-0 060 932 der Anmelderin mit gleichem Anmeldetag (30. 10. 81) und gleicher Priorität (18. 3. 81) beschrieben.

Für den Fall, dass in der Fernwirkeinrichtung eine Gruppe von Adressen zugleich den Ein- und/oder Ausgabeeinrichtungen mehrere Bereichsnetze zugeteilt ist und die Telegramme jeweils mehrere Adressenbereiche enthalten, von denen der eine jeweils mit der Adresse eines Bereichsnetzes und ein weiterer jeweils mit der Adresse eines der Ein- und/oder Ausgabe-Elemente belegbar ist, kann es sich als zweckmässig erweisen, dass der Datenspeicher die Telegramminhalte in Abhängigkeit von derjenigen Adresse weitergibt oder sperrt, die in dem für die Bereichsadresse vorgesehenen Adressenbereich des Fernwirktelegramms enthalten ist.

Ferner kann der zur seriellen Datenübertragung zwischen dem Datenspeicher und den Signaleingabeeinrichtungen und gegebenenfalls Signalausgabeeinrichtungen vorgesehene Bus wenigstens einen Lichtwellenleiter enthalten. Ist die Einrichtung zur Ablaufsteuerung Bestandteil einer Station, die als Endstelle einer Fernwirkeinrichtung ausgelegt ist, die die Meldungen der abgefragten Signaleingabeeinrichtungen verarbeitet und anzeigt und andererseits Steuerbefehle an die Signalausgabeeinrichtungen abgibt, so ergibt sich ein besonders einfach realisierbares Fernwirksystem zum Überwachen und Steuern von Anlagen innerhalb von Gebäuden, Flugzeugen, Schiffen usw., zumal die serielle Datenübertragung zwischen den Elementen leicht über Lichtwellenleiter abgewickelt werden kann.

Zu den Ausgabeelementen sendet die Station vorzugsweise bitseriell erst die Adresse, dann die Meldungen.

Die Erfindung wird anhand der in den Figuren dargestellten Ausführungsbeispiele näher erläutert.

Es zeigen

Fig. 1 eine Station mit bitparallelem Bus,

Fig. 2 eine Station mit Datenspeicher und bitseriellem Bus,

Fig. 3 weitere Einzelheiten einer Signaleingabeeinrichtung in einer Station nach Fig. 1,

Fig. 4 weitere Einzelheiten einer Signaleingabeeinrichtung in einer Station nach Fig. 2,

Fig. 5 weitere Einzelheiten der nach Fig. 2 und 4 vorgesehenen Zusammenschaltung einer Einrichtung zur Ablaufsteuerung mit einem Datenspeicher,

Fig. 6 den Aufbau der von und zur Fernleitung übertragenen Fernwirktelegramme,

Fig. 7 den zeitlichen Ablauf der Übertragung byte- oder wortserieller Telegramminhalte zwischen den Mikrocomputern und

Fig. 8 den Aufbau der von und zu den Ein-/Ausgabeelementen übertragenen bitseriellen Telegramme.

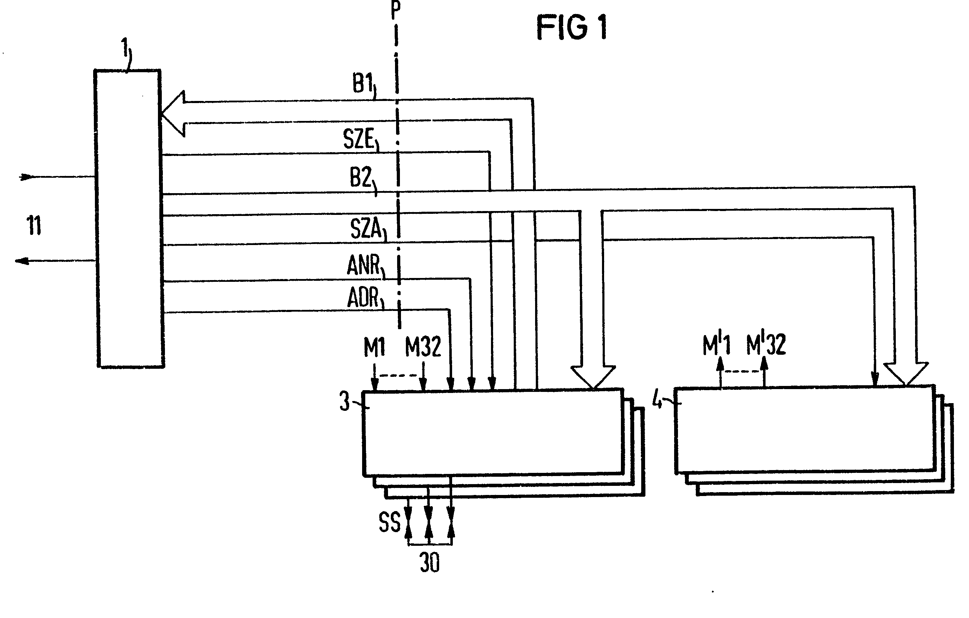

In Fig. 1 ist eine Station einer Fernwirkeinrichtung dargestellt, die mit zyklischer Abfrage und mit Meldungsgabe durch Anreiz arbeitet. Die Fernwirkstation besteht aus mehreren Baugruppen, die über einen parallelen Bus P miteinander verbunden sind. Dargestellt sind die Einrichtung zur Ablaufsteuerung, Signaleingabeeinrichtungen 3 und Signalausgabeeinrichtungen 4. Die Signaleingabeeinrichtungen 3 und die Signalausgabeeinrichtungen 4 werden parallel direkt von der Einrichtung 1 zur Ablaufsteuerung bedient.

Empfängt die Einrichtung 1 zur Ablaufsteuerung über die Fernleitung 11 ein Steuertelegramm, so führt sie zunächst eine Kontrollschrittkontrolle durch. Ist die Kontrollschrittkontrolle positiv, dann gibt die Einrichtung 1 die Adresse und die Meldungen des Steuertelegrammes, d.h. den Telegramminhalt byteweise an den 8-Bit-parallelen Datenbus B2, wobei jedes Byte mit einem Strobeimpuls SZA «Strobezeichenausgabe» versehen ist.

Die Signalausgabeeinrichtungen 4 werden von der Einrichtung 1 zur Ablaufsteuerung direkt byteparallel gesteuert und geben die Meldungen M'1 . . . M'32 aus.

Empfängt die Einrichtung 1 ein Abfragetelegramm, so legt sie an den Datenbus B2 die Adresse des Abfragetelegramms. Daran anschliessend gibt sie das Signal ADR «Adresse richtig» aus. Dadurch werden alle Signaleingabeeinrichtungen 3 aktiviert und prüfen, ob ihre eingestellte Adresse mit der am Datenbus B2 liegenden Adresse identisch ist. Hat eine der Signaleingabeeinrichtungen 3 diese Adresse, so legt sie diese Adresse an den Datenbus B1, worauf die Einrichtung 1 diese Adresse übernimmt und sie mit dem Strobeimpuls SZE «Zeicheneingabe» quittiert. Daraufhin gibt die Signaleingabeeinrichtung 3, aufgerufen durch die Strobeimpulse SZE, die dazugehörigen Datenbytes an die Einrichtung 1 weiter.

Bekommt die Einrichtung 1 als Teil der Fernwirkstation Anreizerlaubnis, so legt sie das Signal ANR «Anreiz» an die Signaleingabeeinrichtungen 3. Daraufhin werden die Staffelzeitzähler der Signaleingabeeinrichtungen aktiviert. Jeder Staffelzeitzähler stellt sich auf die Adresse der betreffenden Signaleingabeeinrichtung 3 ein und zählt rückwärts, bis er bei 0 angekommen ist. Kommt der Staffelzeitzähler einer Signaleingabeeinrichtung 3 beim Zählerstand 0 an und hat diese Signaleingabeeinrichtung 3 einen Anreiz, so legt sie ihre Adresse an den Datenbus B1, worauf die Einrichtung 1 über einen Impuls SZE diese Adresse quittiert und die vier nachfolgenden Datenbytes, aufgerufen durch die SZF Impulse, übernimmt. Während die Signaleingabeeinrichtung 3 ihre fünf Bytes an die Einrichtung 1 weitergibt, gibt sie ein Sperrsignal SS an die Sammelleitung 30 ab, das das Weiterzählen der Staffelzeitzähler der anderen Signaleingabeeinrichtungen sperrt. Hat die Signaleingabeeinrichtung 3 ihre fünf Bytes an die Einrichtung 1 weitergegeben, so nimmt sie das Sperrsignal SS weg, die Staffelzeitzähler zählen weiter und die nächste Signaleingabeeinrichtung 3, die einen Anreiz hat, kann ihre Informationen der Einrichtung 1 mitteilen.

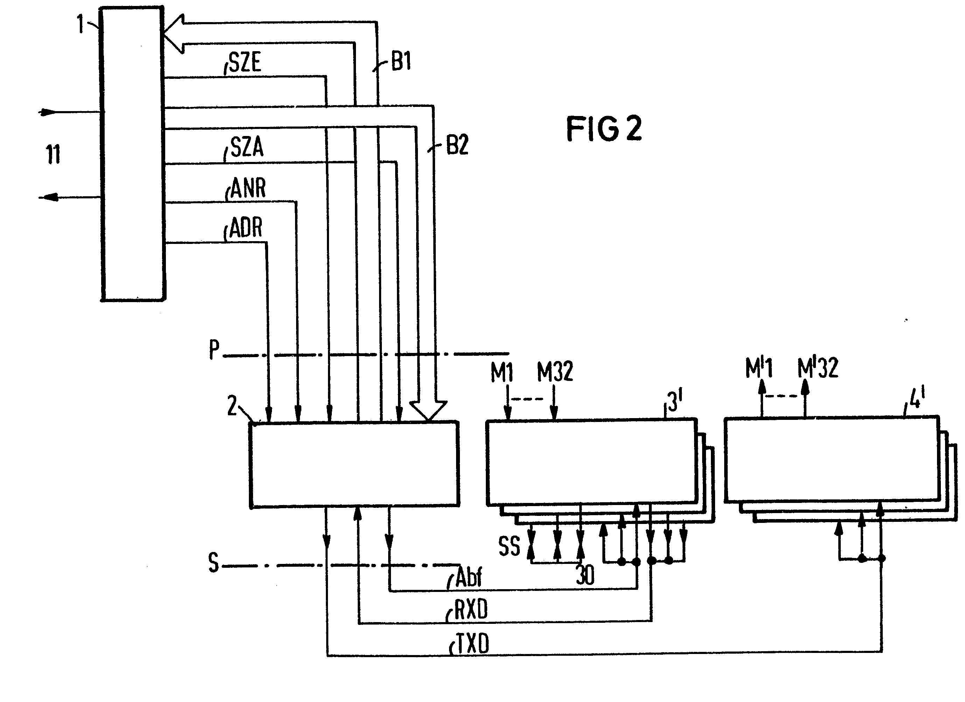

In Fig. 2 ist ebenfalls eine Station einer Fernwirkeinrichtung dargestellt, die mit zyklischer Abfrage und mit Meldungsgabe durch Anreiz arbeitet. Die Fernwirkstation enthält als zusätzliche Baugruppe den Datenspeicher 2. Die Signaleingabeeinrichtungen 3' und die Signalausgabeeinrichtungen 4' werden von der Einrichtung 1 zur Ablaufsteuerung mit Hilfe des Datenspeichers 2 seriell bedient. Die serielle Schnittstelle S enthält eine vom Datenspeicher zu den Signaleingabeeinrichtungen führende Leitung Abf, eine vom Datenspeicher 2 zu den Signalausgabeeinrichtungen führende Leitung TxD und eine dritte Leitung RxD, die von den Signaleingabeeinrichtungen 3 zum Datenspeicher 2 führt.

Die Verbindung zwischen Datenspeicher 2 und Einrichtung 1 zur Ablaufsteuerung erfolgt über die parallele Schnittstelle P. Die parallele Schnittstelle P enthält den Bus B1 zur 8-Bit-parallelen Dateneingabe in die Ablaufsteuerung, den Bus B2 zur 8-Bit-parallelen Datenausgabe aus der Ablaufsteuerung und eine Leitung für die Kriterien SZE, SZA, ANR und ADR.

Empfängt die Einrichtung 1 zur Ablaufsteuerung ein Steuertelegramm, so führt sie zunächst Kontrollschrittkontrolle durch. Ist die Kontrollschrittkontrolle positiv, dann gibt die Einrichtung die Adresse und die Meldungen des Steuertelegrammes, d.h. den Telegramminhalt byteweise an den 8-Bit-parallelen Datenbus B2, wobei jedes Byte mit einem Strobeimpuls SZA «Strobezeichenausgabe» versehen ist.

Der Datenspeicher 2 übernimmt das Byte. Daraufhin gibt die Einrichtung 1 zur Ablaufsteuerung das zweite Byte und den Strobeimpuls SZA aus. Daraufhin folgen das dritte bis fünfte Byte mit den Strobeimpulsen SZA. Der ganze Vorgang dauert etwa 350 μsec. Im ersten Byte ist die Adresse, im zweiten bis fünften Byte sind die Informationen des Telegramms enthalten.

Der Datenspeicher 2 gibt dieses Telegramm normalerweise unverzüglich bitseriell über die Leitung TxD «Transmit Data» an die Signalausgabeeinrichtung 4' weiter. Der Bitstrom besteht aus fünf asynchronen Zeichen. Jedes asynchrone Zeichen beginnt mit einem Startschritt und endet mit einem Trennschritt. Dazwischen liegt ein Byte mit 8 Bit. Im ersten asynchronen Zeichen ist die Adresse enthalten, in den restlichen vier asynchronen Zeichen die Daten, die zu der Adresse gehören.

Die Signalausgabeeinrichtungen 4' empfangen diesen Bitstrom, werten ihn adressenmässig aus, speichern die Informationen und zeigen sie mittels Leuchtdioden oder sonstiger Anzeigeelemente an.

Ist bei der Fernwirkstation kein Datenspeicher vorgesehen, so werden die Signalausgabeeinrichtungen 4 entsprechend Fig. 1 direkt von der Einrichtung 1 zur Ablaufsteuerung byteparallel gesteuert. Dabei übernimmt die Signalausgabeeinrichtung die Bytes in der gleichen Weise, in der sie der Datenspeicher 2 übernehmen würde.

Ebenso können die Signaleingabeeinrichtungen 3' ihre Informationen entweder entsprechend Fig. 2 seriell dem Datenspeicher 2 oder nach Fig. 1 parallel direkt an die Einrichtung 1 zur Ablaufsteuerung abgeben. Die nach Fig. 2 vorgesehene serielle Signalübertragung von den Signaleingabeeinrichtungen 3 zum Datenspeicher 2 ist ebenfalls durch Staffelzeiten gesteuert. Dabei sind die Signaleingabeeinrichtungen 3 nach Staffelzeiten geordnet. Vorzugsweise stimmen die Staffelzeiten mit den Adressen der Signaleingabeeinrichtungen überein. Da keine zwei Signaleingabeeinrichtungen die gleichen Adressen haben können, gibt es auch keine Staffelzeiten gleicher Grösse.

Der Datenspeicher 2 fragt in seiner Ruhezeit ständig die Signaleingabeeinrichtungen 3 nach ihrem Meldungsinhalt ab. Zunächst gibt der Datenspeicher 2 ein Abfragesignal Abf an die Signaleingabeeinrichtung 3 ab. Daraufhin wird in allen Signaleingabeeinrichtungen ein Staffelzeitzähler so eingestellt, dass er vom Wert seiner Adresse aus rückwärts zählt. Bei dem Wert 0 angekommen, sendet die Signaleingabeeinrichtung 3 ihre Information seriell in Form von fünf asynchronen Zeichen, in denen die fünf Bytes des Telegramms enthalten sind, zu dem Datenspeicher 2 aus. Sendet eine Signaleingabeeinrichtung, so gibt sie das Signal SS, d. h. ein Sperrsignal an die Sammelleitung 30 ab, das die Staffelzeitzählung der anderen Signaleingabeeinrichtungen anhält, bis die Signaleingabeeinrichtung, die das Sperrsignal abgibt, ihre asynchronen Zeichen ausgesendet hat. Auf diese Weise übergeben alle in der Station vorhandenen Signaleingabeeinrichtungen 3 dem Datenspeicher 2 ihre Meldungen.

Im Datenspeicher 2 werden die Adressen der Signaleingabeeinrichtungen 3 und ihre Meldungen gespeichert und für die Einrichtung 1 zur Ablaufsteuerung bereit gehalten. Empfängt die Einrichtung 1 zur Ablaufsteuerung ein Abfragetelegramm einer Zentrale, so gibt sie das Signal ADR «Adresse richtig» und gleichzeitig über den Datenbus B1 auch die Adresse, die in dem Abfragetelegramm enthalten ist, an den Datenspeicher 2 weiter. Der Datenspeicher 2 nimmt die 8-Bit-parallele Adresse an, vergleicht sie mit den Adressen der Signaleingabeeinrichtungen 3, die in die Speicher des Datenspeichers 2 geschrieben sind. Ist die Adresse vorhanden, so legt der Datenspeicher 2 diese Adresse an den zur Einrichtung 1 zur Ablaufsteuerung hin führenden 8-Bit-parallelen Datenbus B1.

Die Adresse muss im beschriebenen Beispiel von der hexadezimalen Zahl FF verschieden sein. Die Einrichtung 1 zur Ablaufsteuerung testet, ob das über den 8-Bit-parallelen Datenbus B1 empfangene Bitmuster von dem hexadezimalen Bitmuster FF verschieden ist. Ist dies der Fall, so nimmt sie die vom Datenspeicher 2 angebotene Adresse an, gibt ein Signal SZE «Strobe-Zeicheneingabe» ab. Daraufhin gibt der Datenspeicher 2 das nächste Datenbyte ab, das die Einrichtung 1 annimmt und mit einem Impuls SZE quittiert. Darauf gibt der Datenspeicher 2 das dritte Datenbyte ab, das die Einrichtung 1 mit dem Impuls SZE quittiert usw., bis das Adressbyte und die vier Datenbytes an die Einrichtung 1 übergeben worden sind. Die Einrichtung 1 sendet daraufhin das Antworttelegramm in der üblichen Form an die Zentrale.

Bekommt die Einrichtung 1 als Teil der Fernwirkstation Anreizerlaubnis, so legt sie das Signal ANR «Anreiz» an den Datenspeicher 2.

Der Datenspeicher 2 enthält eine Einrichtung zum Alt-/Neu-Vergleich, mit deren Hilfe Meldungsänderungen festgestellt werden. Jede Meldungsänderung oder Meldungsänderungen bei vorgegebenen Adressen lösen die Speicherung eines Anreizes aus. Der Datenspeicher 2 stellt anhand seines Speicherinhaltes fest, ob Adressen mit Anreiz vorhanden sind. Daraufhin legt der Datenspeicher 2 die 8-Bit-breite Adresse über den Datenbus B1 an den Eingang zur 8-Bit-parallelen Dateneingabe der Einrichtung 1. Das Byte unterscheidet sich von dem Byte FF. Deswegen nimmt die Einrichtung 1 dieses Byte an, quittiert es mit dem Impuls SZE «Strobe-Zeicheneingabe» worauf der Datenspeicher 2 die dieser Adresse zugeordneten nächsten vier Bytes dem Datenbus B1 anlegt, die dann durch die Impulse SZE in die Einrichtung 1 übernommen werden. Die Einrichtung 1 sendet daraufhin das Telegramm aus und prüft, ob der Datenspeicher 2 die Information FF hexadezimal angelegt hat. Hat der Datenspeicher 2 die nächste Adresse nicht gleich FF angelegt, so übernimmt sie die Einrichtung 1, quittiert den Impuls SZE «Strobe-Zeicheneingabe». Daran anschliessend legt der Datenspeicher 2 die dieser Adresse zugeordneten nächsten vier Bytes an den Datenbus B1 an. Die Einrichtung 1 nimmt die Daten an und sendet sie an die Fernleitung 11 aus. Daraufhin prüft die Einrichtung 1, ob am Datenbus B1 ein Byte liegt, das von FF hexadezimal verschieden ist. Liegt wiederum ein von FF verschiedenes Byte an, dann übernimmt die Einrichtung 1 dieses Byte und quittiert es mit dem SZE-Impuls. Der Datenspeicher übergibt dann die dazugehörigen vier Datenbytes an die Einrichtung 1.

Hat der Datenspeicher 2 auf diese Weise alle mit einem Anreiz verbundenen Adressen der Signaleingabeeinrichtungen 3 an die Einrichtung 1 übergeben, legt er an den Datenbus B1 ein Byte FF an. Die Einrichtung 1 erkennt dies und gibt die Anreizerlaubnis an die nächste Station der Fernwirkeinrichtung weiter.

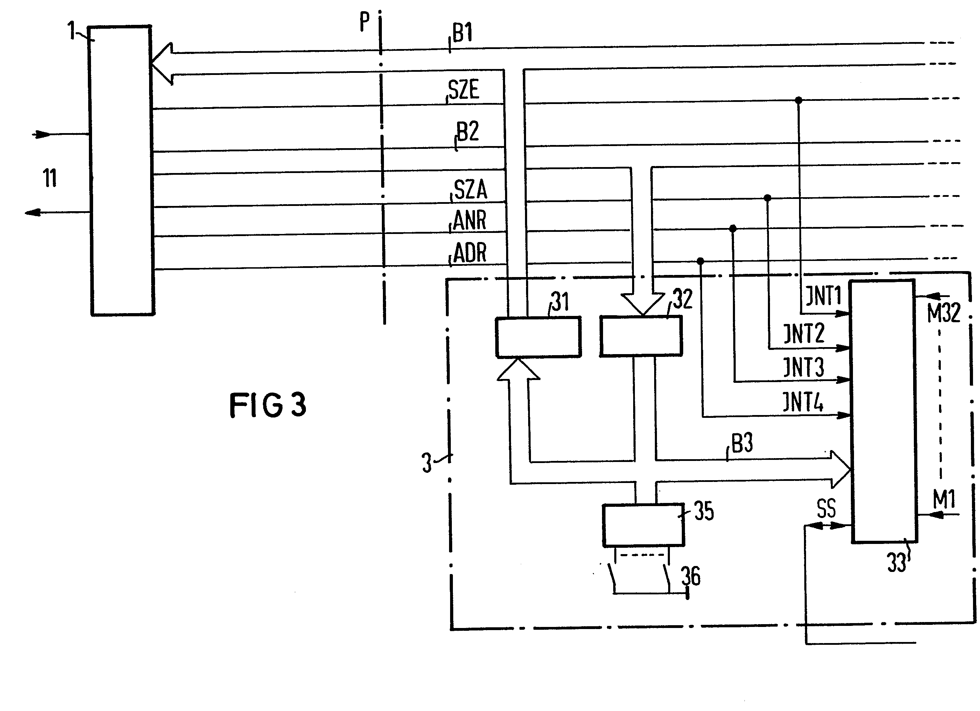

Fig. 3 zeigt weitere Einzelheiten einer Signaleingabeeinrichtung 3 nach Fig. 1. Der Datenbus B2 führt über den 8-Bit-Buffer 32 in den Mikrocomputer 33 der Signaleingabeeinrichtung 3. Der Datenbus B1 der Einrichtung 1 zur Ablaufsteuerung führt vom Mikrocomputer 33 der Signaleingabeeinrichtung 3 über den 8-Bit-breiten Speicher 31 zur Einrichtung 1. Strobezeicheneingabe SZE, Strobezeichenausgabe SZA, Strobe Anreiz ANR und Strobe ADR «Adresse richtig» sind die Interrupte 1, 2, 3 und 4 des Mikrocomputers 33 der Signaleingabeeinrichtung 3.

Die Adressen, von denen jede in den Signaleingabeeinrichtungen 3 der Station nur einmal vorkommt, werden jeweils zusätzlich zu den eingegebenen Signalen in codierter Form übertragen. Der Staffelzeitzähler 35 ist durch einen auf die jeweilige Adresse einstellbaren Adressenspeicher auf eine der eingestellten Adresse zugeordnete Zählerstellung voreinstellbar. Der Adressenspeicher ist als Codierschalter 36 ausgebildet, der über den abfragbaren Port 35 an den Datenbus B3 angeschlossen ist.

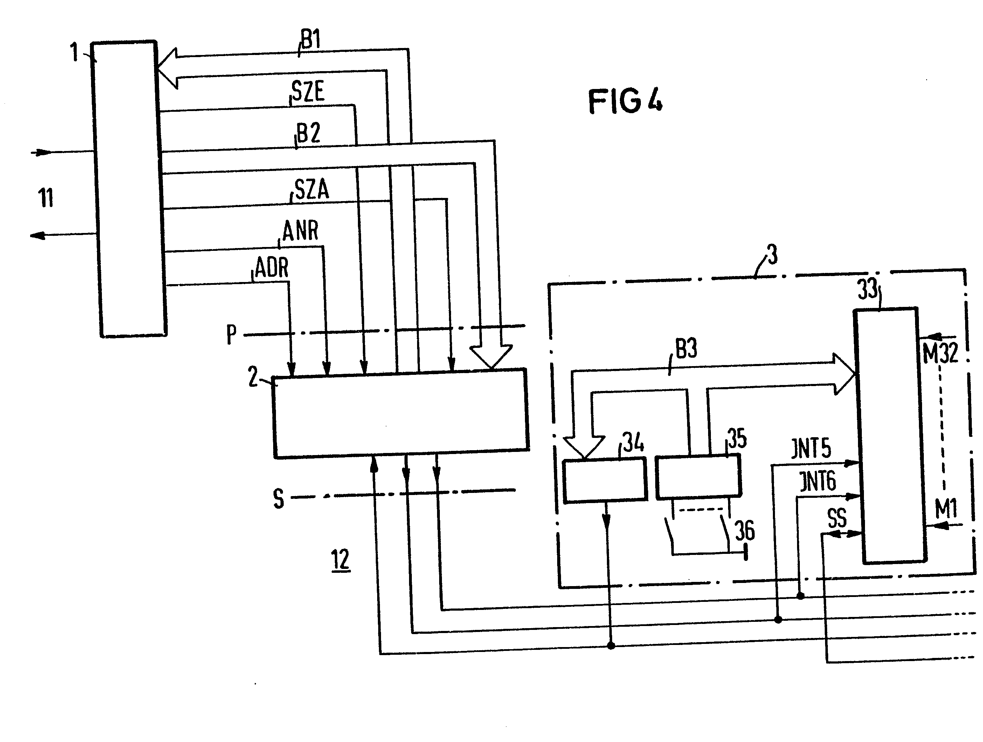

Fig. 4 zeigt weitere Einzelheiten einer Signaleingabeeinrichtung 3 nach Fig. 2. Der Datenbus B2 führt zum Datenspeicher 2. Der Datenbus B1 der Einrichtung 1 zur Ablaufsteuerung führt direkt vom Datenspeicher 2 zur Einrichtung 1. Die serielle Datenleitung des Datenspeichers 2 kommt vom Parallel-Serienumsetzer 34 des Mikrocomputers 33 der Signaleingabeeinrichtung 3, während die Steuerleitung «Datenabfrage» und «Datenanreiz» als Interrupt 5 bzw. Interrupt 6 in den Mikrocomputer 33 der Signaleingabeeinrichtung 3 geführt sind.

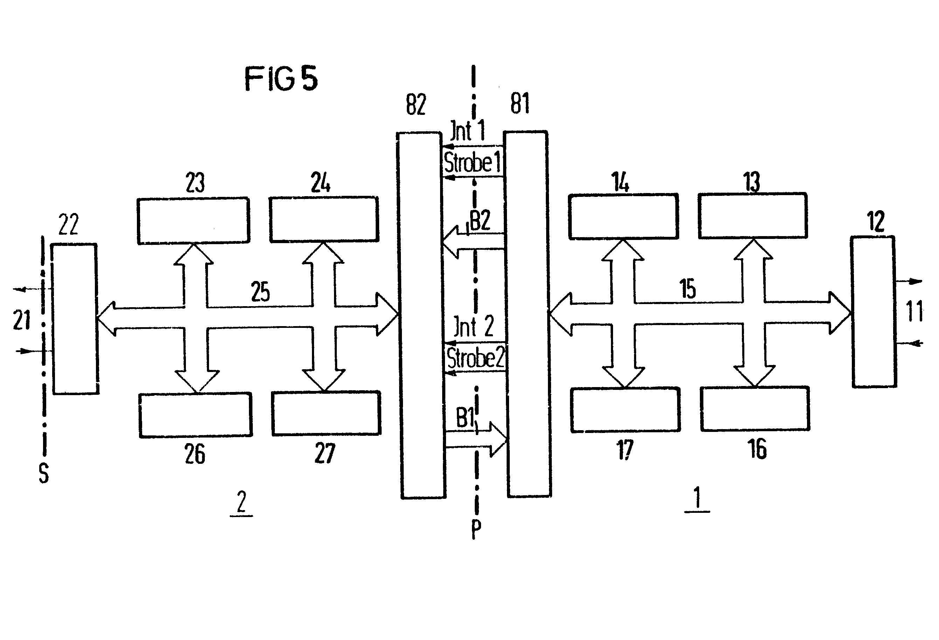

Fig. 5 zeigt den Aufbau einer Zentrale oder Station eines Fernwirksystems mit zwei Mikrocomputern 1 und 2, wobei der Mikrocomputer 1 als Ablaufsteuerung die Telegramme auf seiten der Fernleitung 11 seriell sendet, empfängt und auswertet, der Mikrocomputer 2 als Datenspeicher die Daten der Telegramme speichert und sie über die Schnittstelle S seriell an die in der Figur nicht dargestellten Ein- und/oder Ausgabeeinrichtungen weitergibt oder Daten von den Ein- und/oder Ausgabeeinrichtungen seriell empfängt und sie für den Mikrocomputer 1 zum Aussenden als Fernwirktelegramm bereithält. Der Mikrocomputer 1 enthält den Programmspeicher 13, den Timer 14, den Datenspeicher 16 und den Mikroprozessor 17, die an den Bus 15 angeschlossen sind. Der Mikrocomputer 2 enthält den Programmspeicher 23, den Timer 24, den Datenspeicher 26 und den Mikroprozessor 27, die am Bus 25 liegen. Die Mikrocomputer 1 und 2 können in vorteilhafter Weise, beide für sich, für ihre speziellen Aufgaben programmiert werden. Insbesondere führt der Mikrocomputer 1 irgendeinen Telegrammaustausch mit anderen Stationen durch; der Mikrocomputer 2 verarbeitet die Daten von dem Peripheriegerät oder vom Mikrocomputer 1 und gibt sie nach einer bestimmten Prozedur weiter.

Der Datenaustausch zwischen den beiden Mikrocomputern 1 und 2 erfolgt so, dass der serielle Daten- bzw. Telegrammfluss an den seriellen Schnittstellen der Mikrocomputer nicht gestört wird. Der Mikrocomputer 1 bestimmt den Zeitpunkt des Datenaustausches zwischen den Mikrocomputern 1 und 2. Die Daten werden byte- oder wortweise und in definierten Blöcken von mehreren Bytes übergeben. Da der Zeitpunkt der Datenabgabe und -annahme vom Mikrocomputer 1 bestimmt wird, haben die Interrupte Int1 und Int2 Priorität vor allen Interrupten des Mikrocomputers 2. Ausserdem ist der Mikrocomputer 2 nach Auftreten eines Interruptes Int1 oder Int2 innerhalb einer bestimmten Zeit bereit, die Datenblöcke vom Mikrocomputer 1 anzunehmen oder an den Mikrocomputer 1 abzugeben.

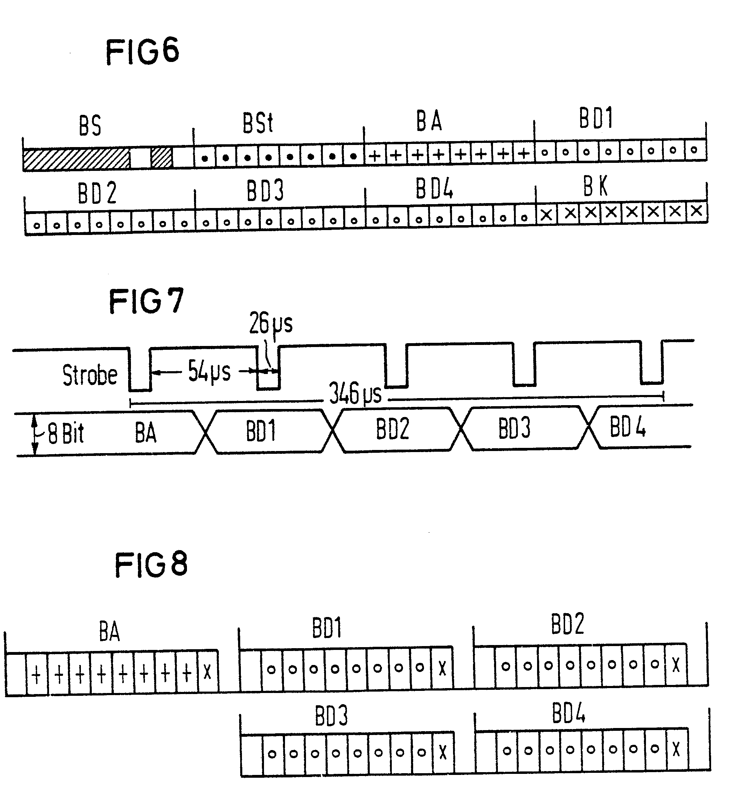

Von der Fernleitung bzw. Leitung 11 kommt ein serielles Fernwirktelegramm entweder asynchron, wobei jedes Byte in einem Anlauf- und Trennschritt verpackt ist oder entsprechend Fig. 6 synchron mit einem Datenblock von acht Bytes BD1 ...BD4, der mit einem Synchronbyte BS beginnt und mit einem Byte BK für die Fehlerkontrolle endet.

Der Peripherie-Baustein 12, z.B. vom Typ SAB 8251, dient als Serien-Parallelumsetzer. Er speichert das einlaufende Byte und bietet es parallel dem Prozessor 17 des Mikrocomputers 1 an, während das nächste Byte einläuft und zwischengespeichert wird. Ist das letztgenannte Byte eingelaufen, überschreibt es das vorhergehende Byte. Der Prozessor 17 im Mikrocomputer 1 muss also das n-te parallel anliegende Byte abholen, solange das n + 1-te Byte einläuft, sonst wird es überschrieben.

Die im Mikrocomputer 1 gespeicherten Adress- und Datenbytes eines Telegramms werden auf Parity-Fehler und/oder über das Kontrollbyte auf Bitfehler untersucht. Bei Fehlerfreiheit ruft der Mikrocomputer 1 über Interrupt Int1 den Mikrocomputer 2 auf und gibt die fünf Bytes nacheinander, jedes Byte mit einem Stroboimpuls Strobe1 versehen, über den Peripherie-Baustein 81 des Mikrocomputers 1, z.B. vom Typ SAB 8255, an den Peripherie-Baustein 82 des Mikrocomputers 2, im genannten Beispiel ebenfalls vom Typ SAB 8255.

Mit dem Stroboimpuls wird das am Peripherie-Baustein 81 anliegende Byte in den Peripherie-Baustein 82 gespeichert und gibt für den Prozessor 62 des Mikrocomputers 2 einen Interrupt aus, der bis zum nächsten Stroboimpuls bedient werden muss, sonst wird das gespeicherte Byte vom nächsten Byte überschrieben.

Hat der Mikrocomputer 2 entsprechend Fig. 7 alle fünf Bytes angenommen, so gibt der Peripherie-Baustein 22 die Daten mikroprozessorgesteuert seriell an die Ein-/Ausgabeelemente weiter.

Während der Peripherie-Baustein 22 die Daten, wie in Fig. 8 gezeigt, an die Ein-/Ausgabeelemente weitergibt, kann über Interrupt Int2 eine Anforderung nach Datenabgabe an den Mikrocomputer 2 gestellt werden. Hat der Mikrocomputer 2 keine Daten weiterzugeben, dann legt er an den Peripherie-Baustein 81 des Mikrocomputers 1 ein vorgegebenes Byte, z.B. das Byte FF hexadezimal an. Der Mikrocomputer 1 erkennt dies und nimmt seine Byteanforderung zurück. Bietet der Mikrocomputer 2 jedoch ein Byte an, das nicht gleich FF hexadezimal ist, so nimmt es der Mikrocomputer 1 an und fordert mit den Stroboimpulsen Strobe2 die nächsten vier Bytes an. Diese insgesamt fünf Bytes sendet der Mikrocomputer 1 anschliessend in einem Telegrammrahmen als Fernwirktelegramm aus und fordert über Interrupt Int2 die nächsten fünf Bytes an. Gibt der Mikrocomputer 2 das vorgegebene Byte, z.B. FF ab, so wird die Anforderung beendet.

Während der Mikrocomputer 2 die Byteanforderung des Mikrocomputers 1 bedient, kann er gleichzeitig die Datenübergabeprozedur zu den oder von den Ein- und/oder Ausgabeeinrichtungen abwickeln, da die parallele Übergabe von fünf Bytes vom oder zum Mikrocomputer 1 schneller ist als die zeitliche Dauer eines von den Signaleingabeeinrichtungen oder zu den Signalausgabeeinrichtungen oder zur Fernleitungsseite laufenden seriellen Bytes.

Das serielle Byte hat bei einer üblichen Bitrate von 2400 Bit/s eine zeitliche Länge von 4,6 s; die Datenübergabe von fünf zeitlich aufeinanderfolgenden Bytes jeweils parallel erfolgt, z.B. bei Verwendung des Peripherie-Bausteines SAB 8255, in etwa 360 µs.

Entsprechend Fig. 5 sind die im Pufferspeicher enthaltenen Datenregister in zwei Peripherie-Bausteinen enthalten, mit denen die beiden Mikrocomputer versehen sind. Jeder der beiden Peripherie-Bausteine 81, 82 enthält je Übertragungsrichtung ein Register. Das Senderegister des einen ist jeweils mit dem Empfangsregister des anderen Mikrocomputers verbunden.

Andererseits kann jeder der beiden Peripherie-Bausteine für die Senderichtung ein Register enthalten oder es kann jeder der beiden Peripherie-Bausteine ein Register enthalten, wobei ein Register des einen Peripherie-Bausteines mit einem Register des anderen Peripherie-Bausteines verbunden ist. Im letztgenannten Fall ist bei Datenübergabe vom Mikrocomputer 1 zum Mikrocomputer 2 das Register des Mikrocomputers 1 auf Senden und das Register des Mikrocomputers 2 auf Empfang gesteuert. Bei Datenübergabe vom Mikrocomputer 2 zum Mikrocomputer 1 wird das Register des Mikrocomputers 2 auf Senden und das Register des Mikrocomputers 1 auf Empfang gesteuert.

Der Datenaustausch zwischen der Station und dem Mikrocomputer 2 wird zwischen längeren Pausen sehr schnell durchgeführt, da zwischen den beiden Mikrocomputern eine parallele Datenübergabe vorgesehen ist.

**Patentansprüche**

1. Station für Fernwirkeinrichtungen, bei der Signaleingabeeinrichtungen (3) über wenigstens einen gemeinsamen Bus an eine Einrichtung (1) zur Ablaufsteuerung angeschlossen sind, wobei die Signaleingabeeinrichtungen (3) jeweils auf eine Adresse einstellbar sind und durch die Einrichtung (1) zur Ablaufsteuerung Impulstelegramme, insbesondere sowohl im Abfrage- als auch im Anreizbetrieb, aussendbar sind, dadurch gekennzeichnet, dass die Signaleingabeeinrichtungen (3) jeweils einen, von Signaleingabeeinrichtung zu Signaleingabeeinrichtung auf verschiedene Staffelzeiten voreinstellbaren Staffelzeitzähler (35) enthalten und dass der Staffelzeitzähler (35) jeweils über ein an einen Sperrein- und -ausgang gelegtes Signal während der Dauer des Signals für ein Weiterzählen sperrbar ist und dass der Sperreingang bei sendender Signaleingabeeinrichtung mit Sperrpotential beaufschlagbar ist und dass die Signaleingabeeinrichtungen jeweils mit ihrem Sperreingang an eine erste Sammelleitung und mit je einem Rücksetzeingang des Staffelzeitzählers an eine zweite, an die Einrichtung zur Ablaufsteuerung geführte Sammelleitung angeschlossen sind.

2. Station nach Anspruch 1, dadurch gekennzeichnet, dass die Adressen, von denen jede in den Signaleingabeeinrichtungen (3) der Station nur einmal vorkommt, jeweils zusätzlich zu den eingegebenen Signalen in codierter Form übertragen werden und dass die Staffelzeitzähler (35) durch einen auf die jeweilige Adresse einstellbaren, insbesondere als Codierschalter (36) ausgebildeten Adressenspeicher auf eine der eingestellten Adresse zugeordnete Zählerstellung voreinstellbar sind.

3. Station nach Anspruch 1 oder 2, dadurch gekennzeichnet, dass der Informationsaustausch zwischen der Einrichtung (1) zur Ablaufsteuerung und den Signaleingabeeinrichtungen (3) über einen Datenspeicher (2) geführt ist, der über eine bitparallele Schnittstelle (P) mit der Einrichtung (1) zur Ablaufsteuerung und über einen bitseriellen Bus (S) an die Signaleingabeeinrichtungen (3) geführt ist.

4. Station nach einem der Ansprüche 1 bis 3, dadurch gekennzeichnet, dass die Signaleingabeeinrichtungen (3) jeweils einen Anreizspeicher enthalten und dass nur die Signaleingabeeinrichtungen (3), bei denen ein Anreiz gespeichert ist, durch den Staffelzeitzähler zur Signalgabe freigebbar sind.

5. Station nach einem der Ansprüche 1 bis 3, dadurch gekennzeichnet, dass die Signaleingabeeinrichtungen (3) jeweils einen Anreizspeicher enthalten und dass die Signaleingabeeinrichtungen (3) über zwei Steuerleitungen derart steuerbar sind, dass durch einen Steuerimpuls auf der einen Leitung alle Signaleingabeeinrichtungen (3) und durch einen Steuerimpuls auf der anderen Leitung nur die Signaleingabeeinrichtungen, bei denen ein Anreiz vorliegt, durch den Staffelzeitzähler aktivierbar sind.

6. Station nach Anspruch 3, dadurch gekennzeichnet, dass alle Signaleingabeeinrichtungen (3) durch ihren Staffelzeitzähler zur Signalgabe freigebbar sind und dass der Datenspeicher (2) mit einer Einrichtung zum Alt-/Neu-Vergleich versehen ist und wenigstens für einen vorgegebenen Teil der Meldesignale durch Alt-Neu-Vergleich Anreize bildet und dass die den Anreizen zugeordneten Meldesignale durch die Einrichtung (1) zur Ablaufsteuerung vom Datenspeicher (2) abfragbar sind.

7. Station nach einem der Ansprüche 1 bis 6, dadurch gekennzeichnet, dass die Signaleingabeeinrichtungen (3) derart ausgebildet sind, dass sie wahlweise über den bitseriellen Bus und den Datenspeicher (2) oder über die bitparallele Schnittstelle (P) unmittelbar an die Einrichtung (1) zur Ablaufsteuerung anschliessbar sind.

8. Station nach einem der Ansprüche 1 bis 7, dadurch gekennzeichnet, dass die Einrichtung zur Ablaufsteuerung und der Datenspeicher jeweils durch einen Mikrocomputer gebildet sind, und dass an den zur Datenspeicherung und/oder Datenverarbeitung dienenden Mikrocomputer (2) ein Peripherie-Baustein (22) für eine serielle Ein- oder Ausgabe der Daten angeschlossen ist und dass an der bitparallelen Schnittstelle ein Pufferspeicher mit wenigstens einem Datenregister je Übertragungsrichtung vorgesehen ist und dass der als Einrichtung zur Ablaufsteuerung dienende Mikrocomputer (1) den Zeitpunkt des wortseriellen Datenaustausches über den Pufferspeicher sowohl in der einen als auch in der anderen Übertragungsrichtung bestimmt.

9. Station nach einem der Ansprüche 1 bis 8, dadurch gekennzeichnet, dass für den Fall, dass in der Fernwirkeinrichtung eine Gruppe von Adressen zugleich den Ein- und/oder Ausgabeeinrichtungen mehrerer Bereichsnetze zugeteilt ist und die Telegramme jeweils mehrere Adressenbereiche enthalten, von denen der eine jeweils mit der Adresse eines Bereichsnetzes und ein weiterer jeweils mit der Adresse eines der Ein- und/oder Ausgabe-Elemente belegbar ist, der Datenspeicher (2) die Telegramminhalte in Abhängigkeit von derjenigen Adresse weitergibt oder sperrt, die in dem für die Bereichsadresse vorgesehenen Adressenbereich des Fernwirktelegramms enthalten ist.

10. Station nach einem der Ansprüche 1 bis 9, dadurch gekennzeichnet, dass der zur seriellen Datenübertragung zwischen dem Datenspeicher (2) und den Signaleingabeeinrichtungen und gegebenenfalls Signalausgabeeinrichtungen vorgesehene Bus wenigstens einen Lichtwellenleiter enthält.

**Claims**

1. A station for remote control devices, in which signal input devices (3) are connected via at least one common bus to a flow control device (1), where the signal input devices (3) can each be set at an address and where pulse telegrams, in particular both in interrogation operation and in impulse operation, can be transmitted by the flow control device (1), characterised in that the signal input devices (3) each include a staggered time counter (35) which can be preset at staggered times which differ from signal input device to signal input device, and that via a signal applied to a blocking input and output, the staggered time counter (35) can be blocked from counting on for the duration of the signal, and that when a signal input device is transmitting, the blocking input can be acted upon by blocking potential, and that the signal input devices are each connected by their blocking input to a first collective line and are each connected by a reset input of the staggered time counter to a second collective line which leads to the flow control device.

2. A station as claimed in claim 1, characterised in that the addresses – each of which occurs only once in the signal input devices (3) of the station – are each transmitted in coded form in addition to the input signals, and that the staggered time counters (35) can be preset, by means of an address store which is set at the respective address and which in particular comprises a coder switch (36) at a counter position assigned to the set address.

3. A station as claimed in claim 1 or 2, characterised in that the information exchange between the flow control device (1) and the signal input devices (3) takes place via a data store (2) which leads via a bit-parallel interface (P) to the flow control device (1) and via a bit-serial bus (S) to the signal input devices (3).

4. A station as claimed in one of the claims 1 to 3, characterised in that the signal input devices (3) each include an impulse store and that only those signal input devices (3) in which an impulse is stored can be enabled by the staggered time counter to emit signals.

5. A station as claimed in one of the claims 1 to 3, characterised in that the signal input devices (3) each include an impulse store, and that the signal input devices (3) can be controlled via two control lines in such manner that when a control pulse occurs on the first line all the signal input devices (3) can be activated by the staggered time counter and when a control pulse occurs on the other line only those signal input devices in which an impulse occurs can be activated by the staggered time counter.

6. A station as claimed in claim 3, characterised in that all the signal input devices (3) can be enabled, for signalling, by their staggered time counters and that the data store (2) is provided with an old/new comparison device and, at least in the case of a predetermined part of the message signals, forms impulses as a result of old/new comparison, and that the message signals assigned to the impulses can be called up from the data store (2) by the flow control device (1).

7. A station as claimed in one of the claims 1 to 6, characterised in that the signal input devices (3) are designed to be such that they can be directly connected to the flow control device (1) either via the bit-serial bus and the data store (2) or via the bit-parallel interface (P).

8. A station as claimed in one of the claims 1 to 7, characterised in that the flow control device and the data store are each formed by a microcomputer, and that the microcomputer (2), which serves for data storage and/or data processing, is connected to a peripheral module (22) for the serial input of data, and that a buffer store comprising at least one data register for each direction of transmission is arranged at the bit-parallel interface, and that the microcomputer (1), which serves as flow control device, determines the time of the word-serial data exchange via the buffer store both in the one and in the other direction of transmission.

9. A station as claimed in one of the claims 1 to 8, characterised in that in the event that in the remote control device a group of addresses is simultaneously assigned to the input and/or output devices of a plurality of zone networks and the telegrams each include a plurality of address zones, of which one can be occupied by the address of a zone network and another can be occupied by the address of one of the input and/or output elements, the data store (2) either forwards or blocks the telegram contents in dependence upon the address which is contained in that address zone of the remote control telegram provided for zone address.

10. A station as claimed in one of the claims 1 to 9, characterised in that the bus which is provided for serial data transmission between the data store (2) and the signal input devices, and where appropriate the signal output devices, includes at least one light waveguide.

**Revendications**

1. Poste pour des dispositifs de télécommande, dans lequel des dispositifs (3) d'introduction de signaux sont raccordés par l'intermédiaire d'au moins un bus commun à un dispositif (1) utilisé pour la commande d'exécution, et dans lequel les dispositifs (3) d'introduction de signaux peuvent être réglés respectivement sur une adresse et, des télégrammes d'impulsions peuvent être émis, notamment aussi bien dans le fonctionnement d'interrogation que dans le fonctionnement d'incitation, par le dispositif (1) utilisé pour la commande d'exécution, caractérisé par le fait que les dispositifs (3) d'introduction de signaux contiennent respectivement un compteur (35) de durées échelonnées, qui est préréglable, d'un dispositif d'introduction de signaux au suivant, sur différentes durées échelonnées, et que la poursuite du comptage du compteur (35) de durées échelonnées peut être bloquée respectivement par l'intermédiaire d'un signal appliqué à une entrée et à une sortie de blocage, pendant la durée du signal, et que l'entrée de blocage peut être chargée par un potentiel de blocage lorsque le dispositif d'introduction de signaux fonctionne à l'émission, et que les dispositifs d'introduction de signaux sont raccordés respectivement, par leur entrée de blocage, à une ligne collectrice et, par une entrée respective de remise à zéro du compteur de durées échelonnées, à une seconde ligne collectrice aboutissant au dispositif utilisé pour la commande d'exécution.

2. Poste suivant la revendication 1, caractérisé par le fait que les adresses, dont chacune se présente seulement une fois dans les dispositifs (3) de transmission de signaux du poste, sont transmises sous forme codée, respectivement en supplément des signaux introduits, et que les compteurs (35) de durées échelonnées peuvent être pré-réglés sur une position de comptage associée à l'adresse réglée, au moyen d'une mémoire d'adresses réglable sur l'adresse respective et réalisée notamment sous la forme d'un commutateur de codage (36)

3. Poste suivant la revendication 1 ou 2, caractérisé par le fait que l'échange d'informations entre le dispositif (1) utilisé pour la commande d'exécution et les dispositifs (3) d'introduction de signaux s'effectue par l'intermédiaire d'une mémoire de données (2), qui est reliée par l'intermédiaire d'une interface (P) à transmission de bits en parallèle, au dispositif (1) utilisé pour la commande d'exécution et, par l'intermédiaire d'un bus (S) à transmission de bits en série, aux dispositifs (3) d'introduction de signaux.

4. Poste suivant l'une des revendications 1 à 3, caractérisé par le fait que les dispositifs (1) d'introduction de signaux contiennent respectivement une mémoire d'incitation et que seuls les dispositifs (3) d'introduction de signaux, dans lesquelles une incitation est mémorisée, peuvent être autorisés par le compteur de durées échelonnées, pour la délivrance de signaux.

5. Poste suivant l'une des revendications 1 à 3, caractérisé par le fait que les dispositifs (3) d'introduction de signaux contiennent respectivement une mémoire d'incitation et que les dispositifs (3) d'introduction de signaux peuvent être commandés par l'intermédiaire de deux lignes de commande de telle sorte que tous les dispositifs (3) d'introduction de signaux peuvent être activés par une impulsion de commande présente dans l'une des lignes et que seuls les dispositifs d'introduction de signaux, dans lesquels l'incitation est présente, peuvent être activés par une impulsion de commande présente dans l'autre ligne, au moyen du compteur de durées échelonnées.

6. Poste suivant la revendication 3, caractérisé par le fait que tous les dispositifs (3) d'introduction de signaux peuvent être autorisés pour la délivrance de signaux par l'intermédiaire de leurs compteurs de durées échelonnées et que la mémoire de données (2) est équipée d'un dispositif servant à réaliser la comparaison valeur ancienne/valeur nouvelle et forme des incitations au moins pour une partie prédéterminée des signaux de signalisation, au moyen de la comparaison valeur ancienne/valeur nouvelle, et que les signaux de signalisation, qui sont associés aux incitations, peuvent être interrogés par le dispositif (1) utilisé pour la commande d'exécution, à partir de la mémoire de données (2).

7. Poste suivant l'une des revendications 1 à 6, caractérisé par le fait que les dispositifs (3) d'introduction de signaux sont agencés de telle sorte qu'ils peuvent être raccordés directement au dispositif (1) utilisé pour la commande d'exécution, au choix par l'intermédiaire du bus de transmission de bits en série ou par l'intermédiaire de la mémoire de données (2), ou par l'intermédiaire de l'interface (P) à transmission de bits en parallèle.

8. Poste suivant l'une des revendications 1 à 7, caractérisé par le fait que le dispositif utilisé pour la commande d'exécution et la mémoire de données sont formés respectivement par un micro-ordinateur et qu'un module périphérique (22) pour une entrée ou sortie en série des données est raccordé au micro-ordinateur (2) servant à réaliser la mémorisation des données et/ou le traitement des données, et qu'une mémoire tampon comportant au moins un registre de données pour chaque sens de transmission est prévue au niveau de l'interface à transmission de bits en parallèle et que le micro-ordinateur (1) utilisé comme dispositif utilisé pour la commande d'exécution détermine l'instant de l'échange des données en série par mots, par l'intermédiaire de la mémoire tampon, aussi bien dans un sens de transmission que dans l'autre.

9. Poste suivant l'une des revendications 1 à 8, caractérisé par le fait que dans le cas où un groupe d'adresses est affecté simultanément, dans le dispositif de télécommande, à des dispositifs d'entrée et/ou de sortie de plusieurs réseaux de zones, et où les télégrammes contiennent respectivement plusieurs zones d'adresses, dont l'une peut être occupée respectivement par l'adresse d'un réseau de zone et dont une autre peut être occupée respectivement par l'adresse de l'un des éléments d'entrée et/ou de sortie, la mémoire de données (2) retransmet ou bloque les contenus des télégrammes en fonction de l'adresse qui est contenue dans la zone d'adresse, prévue pour l'adresse de zone, du télégramme de télécommande.

10. Poste suivant l'une des revendications 1 à 9, caractérisé par le fait que le bus prévu pour la transmission de données en série entre la mémoire de données (2) et les dispositifs d'introduction de signaux et éventuellement les dispositifs de sortie de signaux contient au moins un guide d'ondes optiques.

FIG 1

B1, SZE, B2, SZA, ANR, ADR,

P

M1 M32

M'1 M'32

SS

30

3

4

1

11

FIG 2

FIG 3

SZE

B1

B2

SZA

ANR

ADR

P

1

11

31

32

JNT1

JNT2

JNT3

JNT4

B3

M32

M1

SS

35

36

33

3

0 060 339

FIG 4

FIG 5

## FIG 6

| BS | BSt | BA | BD1 |
|---|---|---|---|

| BD 2 | BD3 | BD4 | BK |
|---|---|---|---|

## FIG 7

26 µs

Strobe ← 54 µs →

346 µs

8 Bit | BA | BD1 | BD2 | BD3 | BD4 |

## FIG 8

| BA | BD1 | BD2 |
|---|---|---|

| BD3 | BD4 |
|---|---|